# EUROPEAN PATENT SPECIFICATION

(11) **EP 0 467 436 B1**
(45) Date of publication and mention of the grant of the patent: **13.09.1995**
(21) Application number: 91201604.5
(22) Date of filing: 22.06.1991
(51) Int. Cl.: F23G 5/16, F23G 7/12, F23G 5/20, F23J 7/00, F23G 5/12, B65G 63/04, F23M 5/00

(54) **Plant for the thermodestruction of industrial wastes, especially tyres**
Anlage für die thermische Entsorgung von Industrieabfall, insbesondere Reifen
Installation pour la destruction thermique des déchets industriels, en particulier des pneus

(30) Priority: 20.07.1990 IT 2100690
(43) Date of publication of application: 22.01.1992
(73) Proprietor: MARANGONI TECHNOLOGIES S.p.A., I-Trento (IT)
(72) Inventor: Casse', Alfredo, Monza Milano (IT)
(74) Representative: Raimondi, Alfredo, Dott. Ing. Prof.

(56) References cited:
- EP-A- 0 287 534
- WO-A-88/05145
- DD-A- 274 653
- DE-A- 1 551 845
- DE-A- 2 343 954
- FR-A- 2 250 068
- US-A- 3 487 792
- US-A- 3 791 317
- US-A- 4 338 868
- US-A- 4 547 351
- JOURNAL OF THE AIR POLLUTION CONTROL ASSOCIATION, vol. 39, no. 6, June 1989, PITTSBURGH US pages 884 - 888; MARK J. GIROVICH: 'Performance of high-temperature slagging rotary kiln incinerator'
- RUBBER CHEMISTRY AND TECHNOLOGY, vol. 47, no. 3, July 1974, AKRON US pages 608- 612; J.A. BECKMAN: 'Scrap Tire Disposal, Chapter X. Fuel Value and Incineration'

## Description

This invention has as its subject a plant for the thermodestruction of industrial wastes, in particular tyres.

At the present time, the disposal of used tyres takes place in two ways: by dumping, or by thermodestruction and therefore by means of incinerators.

In the first case, the disposal is subordinated to that of other wastes, with which the tyres must necessarily be mixed in percentages that do not exceed certain predetermined values. Inevitably the disposal takes place fairly slowly, and in every case the least pollution of this form of disposal is achieved by doing without the recovery of the raw materials (steel) and the energy which the tyre would still be able to provide.

In the second case, the recovery of energy and raw materials is, nevertheless, problematic on account of the difficulty of controlling the combustion resulting from the particular chemical composition of the tyre.

During the combustion, in fact, the rubbery portion tends to melt, giving rise to a mass from which particularly polluting smokes derive.

Moreover, the combustion of such a mass has a tendency to be slow, because it takes place only in correspondence with its upper surface and is difficult to control when specific temperatures are exceeded. Furthermore, it is difficult to separate the steel contained as wires in the mass and, moreover, if this is successfully done, the recovered steel has physical and mechanical characteristics which have been altered by the residence inside the mass at a fairly high temperature.

In the art are known some realization of plants for thermodestruction of industrial wates such as those shown in DD-A-274 653 that discloses a plant with one burner associated with an after burner, in US-A-4 338 868 showing a plant with charging head and discharging head fixed to the ground, in WO-A-8 805 145 disclosing a plant having discharging head at a lower level than the charging head.

None of the plants of the prior art can anyhow solve the problem to solve the above mentioned disadvantages.

The objective of the present invention consists in eliminating the aforementioned disadvantages and of providing a plant for the thermodestruction of industrial wastes, in particular of tyres, capable of overcoming the aforementioned disadvantages and constructed in such a manner that it shall together be possible:
- to contain to the maximum extent the harmful emissions into the atmosphere,
- to accelerate the combustion times,
- to recover the energy content and raw materials in such a manner that the latter suffer relatively limited variations in the chemico-physical characteristics, which can therefore be ignored.

These purposes are achieved by a plant for the thermodestruction of industrial wastes, especially tyres, with recovery of energy, according to the characterizing part of claim 1 -.

The invention is illustrated, solely by way of example and in non-limiting context, in the figures of the attached tables of drawings, in which:
- Fig. 1: illustrates the burner and the after-burner;
- Fig. 2: illustrates the means for feeding the burner;
- Fig. 3: illustrates the means for recovering the heat contained in the smoke gases;
- Figures 4 to 6: illustrate in section three different types of after-burner,
- Fig. 7: illustrates a detail of the means of feeding the burner, and
- Fig. 8: illustrates a detail of the burner.

Referring to the aforementioned figures, the thermodestruction plant, referenced generally 1, comprises a burner 2, an after-burner 3, means 4 for charging the burner and means 5 for recovering the heat energy produced by the plant.

The burner 2 comprises a charging head 6, a discharge head 7 and a combustion chamber 8.

The charging head 6 is fixed to the ground constituting the connecting element between the burner and the charging means 4.

Said head 6 comprises a first feed opening or mouth 9, a second opening 10 (see Fig. 8), closed alternatively by a first temporary burning torch 11 or by a plug 12, and a third opening 13 associated with a first motor-driven fan 14. The charging mouth 9 is closed externally by a sliding gate 15, while internally it is provided with a chute 16 inclined towards the lower part of the combustion chamber 8 at an angle β of approximately 8° to the axis 21 of the chamber.

The chute 16 and, in particular, its slope direct the fall of the tyre in such a manner that the tyre descends on one flank without any rotation.

The combustion chamber 8 comprises a cylindrical liner 17 of metal material, lined internally with refractory material.

The refractory material is made up of bricks 20, disposed on a first outer layer 18 and a second inner layer 19.

The bricks 20 have a circular arc construction with a substantially trapezium-shaped section, so that they can be self-supporting with the combustion chamber 8 cylindrical.

The dimensions are determined in advance as a function of the diameter of the liner and of the presence or absence of the outer layer 18 or inner layer 19. The first, furthest out layer 18 is composed, for a third of the length of the combustion chamber, of refractory bricks of type "A". The remaining two-thirds are of type "B". The second layer 19, further in, is composed entirely of refractory bricks of type "C".

The refractory bricks of type "A" have the following chemical composition:

| | |
|---|---|
| Al₂O₃ + TiO₂ | 62-64% |
| Fe₂O₃ | 1.50% |

with sufficient binder to make up 100%.

The refractory bricks of type "B" have the following chemical composition:

| | |
|---|---|
| Al₂O₃ + TiO₂ | 38-40% |
| Fe₂O₃ | 2% |

with sufficient binder to make up 100%.

The refractory bricks of type "C" have the following chemical composition:

| | |
|---|---|
| Al₂O₃ + TiO₂ | 87% |
| Fe₂O₃ | 1.25% |
| Cr₂O₃ | 4% |

with sufficient binder to make up 100%.

The physico-chemical characteristics of the bricks of types A and B can be chosen, in particular, as a function of the requirements of refractoriness and insulation.

The physico-chemical characteristics of the bricks of type "C" are chosen, above all, as a function of their resistance to the wear caused by the scraping of the metal reinforcements of the tyres exposed by the combustion.

The two-layer lining is necessary because the refractory bricks which possess especially high refractoriness have low abrasion resistance characteristics.

The phenomena of abrasion are, in fact, quite high because the temperature of the combustion chamber is stabilized in such a manner as to operate the thermodestruction of the rubbery part of the tyre without, however, melting and oxydizing the metal part, which maintains substantially unchanged its mechanical characteristics and therefore retains a hardness sufficient easily to abrade the surfaces with which it comes into contact.

In this connection, it is important to emphasize that the abrasion phenomena that appear in this furnace are not directly comparable to those which are found in blast furnaces for the melting of steel, because in such furnaces the material, being at a high temperature, is in the molten state and is therefore devoid of mechanical characteristics.

The combustion chamber 8 is rotatable about its own axis 21, which slopes downwards at an angle α , which as an indication may be chosen between 2° and 6°, in such a way that the charging head 6 is at a higher level than the discharge head 7.

The revolving of the combustion chamber 8 prevents the tyre from becoming heaped on others and therefore allows the fire to attack it over its entire surface. The inclination of the combustion chamber 8, in conjunction with its rotation, imparts to the tyre the advancing movement inside the combustion chamber.

The combustion chamber is carried by first and second supports 22 and 23 respectively.

The first support 22 is positioned in proximity to the charging head 6 and comprises a motor-reduction unit 24 capable of imparting to the combustion chamber 8 rotation about its own axis 21 with a peripheral velocity of, by way of indication, from 0.5 to 2 metres per minute.

The second support 23 is positioned in correspondence with the discharge head 7 and may comprise hydraulic lifting means composed of a cylinder 25, capable of varying by very small amounts as desired the value of the angle α. The discharge head 7 is firmly mounted on the ground and comprises a second motor-driven fan 26 and a vertical duct 27.

The vertical duct 27 comprises an upper opening 28, which leads into the after-burner 3, a lower opening 29 situated above means 30 for discharging the unburnt products, and a median opening 31 for connection with the combustion chamber 8.

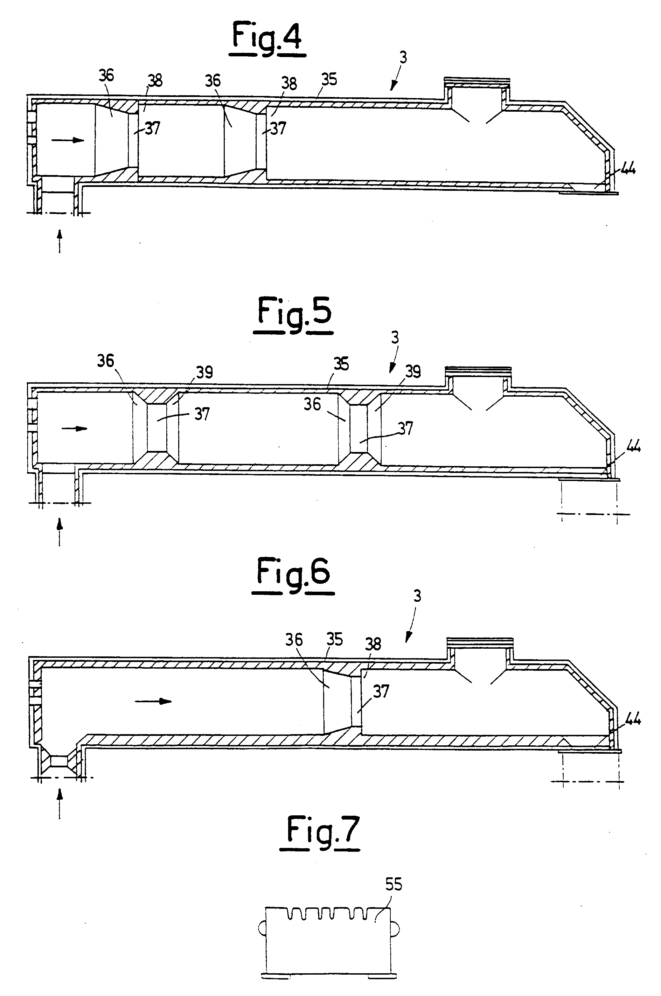

The second motor-driven fan 26 generates a laminar flow of oxidizing air which is introduced axially of the vertical duct 27 and along the entire perimeter of the median opening 31. This flow constitutes, basically, a barrier against escape of the smoke gases through the duct 32, which is sealed and in which are housed the means 30 for discharging the unburnt products, without however constituting a barrier for these unburt products, which are conveyed into a sealed container 33 by a first conveyer belt 34. The unburnt products comprise the ashes from the rubbery portion of the tyres and the metal carcase, which is recovered as foundry scrap. The after-burner 3, shown especially in Figures 4 to 6, comprises a lining of metal material 35 internally faced with refractory material.

The refractory material is chosen mainly as a function of the operating temperature in the after-burner, since abrasion phenomena caused by metal-refractory contact do not occur inside it.

For the purpose of generating turbulent motion for causing intimate remixing of the smoke gases in the oxidation phase and residence of these gases in the after-burner for at least two seconds, the refractory material is shaped in such a manner as to form at least one cross-section of gradually decreasing area 36 in the direction of motion of the smoke gases in the oxidation phase, in such a way as to form at least one continuous reduced cross-section and then to form an annular portion 37, evidently of reduced extension compared with the previous one.

The annular portions 37 then terminate (in the direction of movement of the smoke gases) in sections of suddenly increasing diameter 38 or gradually increasing diameter 39.

In Figures 4 to 6 there are shown, by way of examples, some possible shapes of the internal part of the after-burner. The greater constructional complication of some forms is justified by greater efficiency in the creation of turbulent motion and therefore oxidation of the smoke gases.

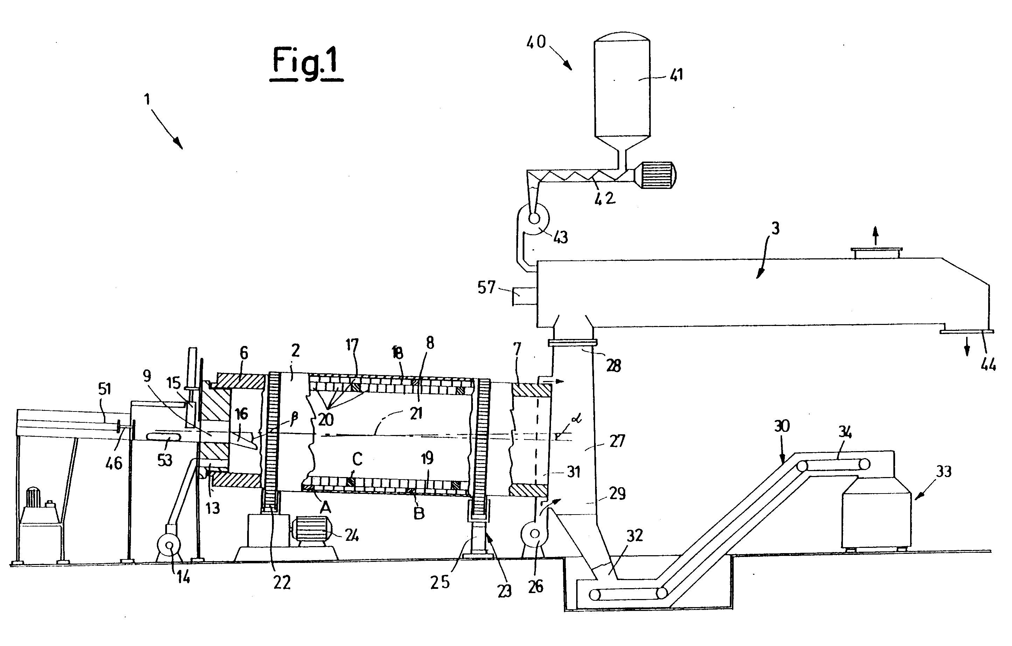

The after-burner 3 comprises, in addition, means for desulphurizing the smoke gases, referenced generally 40 (Fig. 1), and comprises a silo 41, a metering screw feeder 42 and a third motor-driven fan 43 supplied by said metering screw 42. The desulphurizing powder has the following chemical composition: NaHCO₃.

Substantially, the reaction takes place between an alkaline-based reagent containing sodium (NaHCO₃) and the SO₂ contained in the smoke gases. The reaction is as follows:

2NaHCO₃ → Na₂CO₃ + H₂O + CO₂

by thermal decomposition and then

Na₂CO₃ + SO₂ + 1/2 O₂ → Na₂SO₄ + CO₂

by chemical reaction.

During the "thermal decomposition" the evaporation of the water creates porosity on the reagent particles, thereby increasing the exchange area of these particles, or as an alternative it is possible to use the sodium carbonate directly, but in that case slightly lower efficiency is obtained.

The recovery efficiency with this system is, by way of indication, from 50 to 70%.

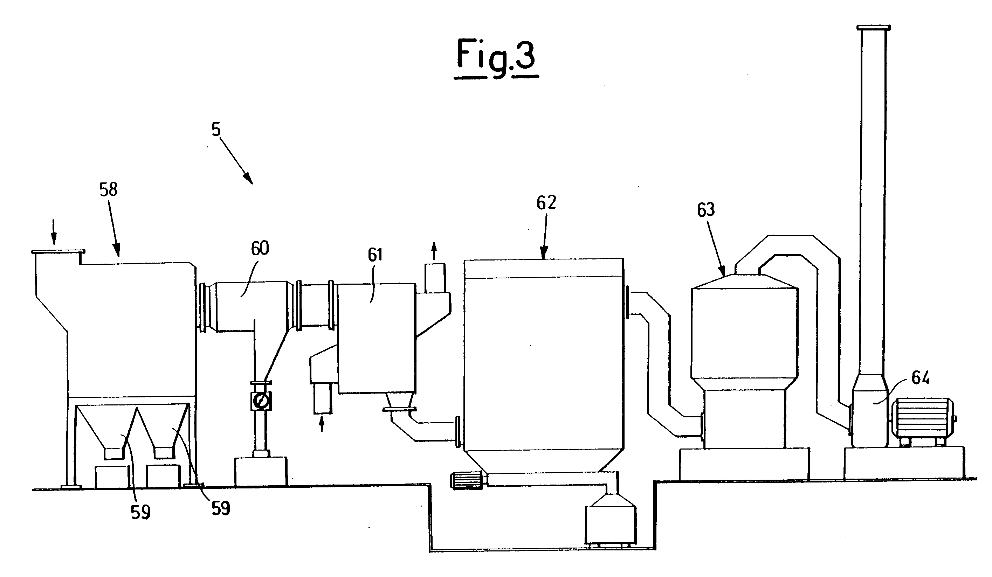

The after-burner 3 comprises, moreover, a discharge opening 44 which may be connected either to a chimney or to means for the recovery of the heat generated, referenced generally 5 (see Fig. 3). The recovery of the heat generated takes place by the use of devices combined together and calibrated in such a manner as to operate with maximum possible efficiency at the temperature of the smoke gases when completely oxidized and desulphurized.

The plant is arranged for the recovery of the heat from the smoke gases by the use of boilers for generating saturated and superheated steam, or water preheaters or feed heaters, or hot air generators, or combined generation plants for the combined production of steam for industrial purposes and electrical energy to be used in situ or to be sold to the national electricity authorities.

In the case shown as an example, the steam generator 58 used for the recovery of the heat content of the combustion gases is of the pressurized type, completely automatic in operation, having a tube bundle comprising vertical water tubes traversed transversely by the flow of the hot gases, with outer walls having tangential tubes or longitudinal cylindrical bodies.

Special soot blowers of the type having nozzle lances, supplied with compressed air or superheated steam, are installed on the tube bundle for the programmed cleaning of the tubes.

Below the tube bundle hoppers 59 are provided for the recovery of the ashes with the extraction screws.

At the outlet from the steam generator, the gases still have a residual recoverable heat content, but they still contain much dust, which can be removed before entering a second, plate-type heat exchanger 61. This removal is obtained by an axial fluidodynamic separator 60, situated on the connecting piping between the steam generator 58 and the second heat exchanger 61 for intercepting the maximum possible quantity of dust.

The second, plate-type heat exchanger 61 enables substantially all the heat potential of the gases to be recovered, with the double purpose of increasing the efficiency of the heat recovery means 5 until the optimum limits are reached and, secondly, of reducing the temperature of the smoke gases to be introduced into the succeeding filtration apparatuses, which have the extremely important function of preventing the dispersal of the dust into the atomosphere.

For this purpose, dry bag filters 62 are used, and possibly supplementary wet desulphurization means 63. An exhaust fan 64 completes the plant.

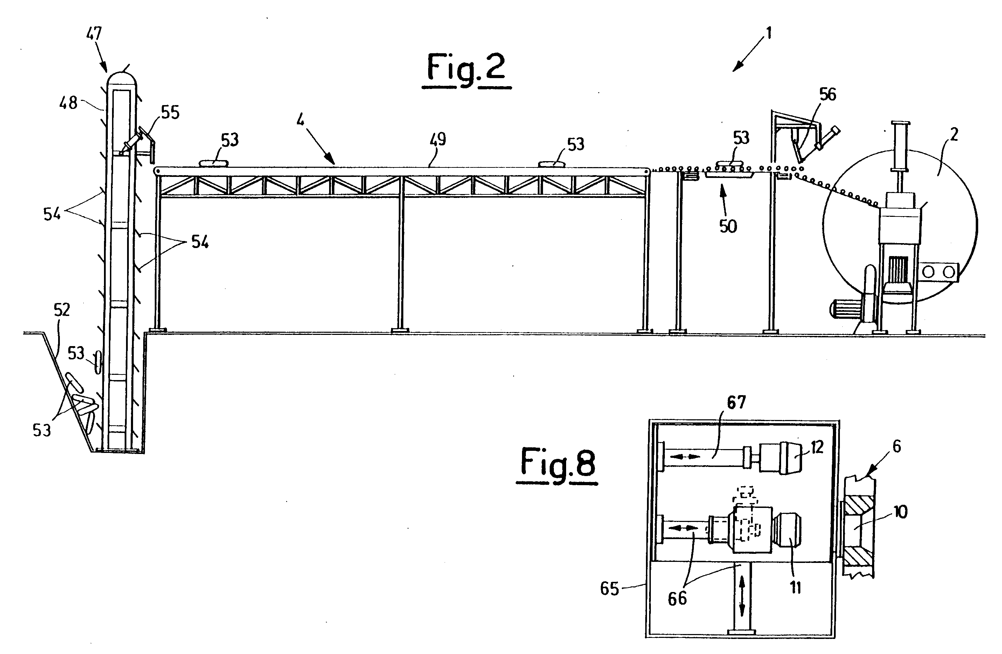

The plant may also comprise charging means referenced generally 47 (see Fig. 2) comprising a first vertical conveyor belt 48, a second horizontal conveyor belt 49, weighing means 50 for the combustible material (tyres) and pusher means 51 (see Fig. 1) for introducing one tyre at a time into the interior of the burner 2 via the charging head 6.

The first vertical conveyor belt 48 possesses a first end, situated inside a pit 52, into which tyres 53 to be burnt are tipped in bulk, and an upper end situated at a level above the first end of the second conveyor belt 49. The first vertical conveyor belt 48 comprises an aligned series of hooks 54, the length of which is such as to engage a tyre one at a time from all the tyres pressing against it as a result of the slope of the wall or walls of the pit 52.

The secure picking-up of one tyre at a time is one of the necessary conditions for the correct metering of the quantity of tyres and therefore of fuel to the burner 2.

Between the vertical conveyor belt 48 and horizontal belt 49 there is interposed an impact-damping plate 55 which, by hydraulic or pneumatic means, warns of the arrival or unhooking of the tyre from the relevant hook 54.

In correspondence with the second end of the second, horizontal conveyor belt 49, there is situated downstream of the weighing means 50 an interception plate 56, controlled by a piston which blocks the dispatch of the tyres to the pusher means 51.

The pusher means 51 comprise a rod 46 which moves substantially parallel to the axis 21 of the combustion chamber 8.

The charging means 47 for the burner 2, the means 30 for removing the unburnt products, the means 5 for recovering the heat generated, are all controlled from a computerized control centre which allows completely automatic functioning of the plant by harmonizing the operation of the individual parts.

The tyres 53 to be burnt are loaded in bulk into the charging pit 52. Each hook 54 of the first vertical conveyor belt 48 engages one tyre at a time. At the top of the first vertical conveyor belt 48, each tyre is tipped over onto the impact-damping plate 55, and thence onto a second horizontal conveyor belt 49, where it lies on one side.

The tyres are weighed by the means 50 and are intercepted by the plate 56 in such a manner that they are offered up individually to the pusher means 51 at intervals that can be predetermined by the central control unit. The piston 51 pushes them through the charging mouth 9, temporarily opened by displacement of the sliding gate 15, which however is never completely closed but allows the introduction of combustion air. The chute 16 prevents the charged tyre from falling onto the bottom of the combustion chamber 8 in a rolling position, and therefore on its side so that it is positioned at the start of the combustion chamber 8 to undergo a complete combustion cycle, including the initial phases.

The temporary burning torch 11 is of the retractable, motorized type, capable of operating on fuel oil or gas, and guarantees preheating up to operating regime of the entire mass of the combustion chamber 8, until the initial operating temperature of 700-800° C is reached. After this starting cycle operation, the temporary burning torch 11 is automatically withdrawn from the chamber and the second opening 10 is closed by the plug 12 of refractory material.

Suitable actuator means are provided for the movements of the burner 11 and plug 12. These consist of a frame with a translatory movement plate 65 supporting the burner 11 and plug 12. The plate is moved by a first actuator, not shown, while the burner and the plug are moved, respectively, by a second and third actuator 66, 67 respectively mounted on the plate.

The rotation about the axis 21 of the combustion chamber 8 enables the tyre to burn and to be oxidized better over its entire surface, avoiding the formation of a mass of tyres, in which combustion would be substantially limited to the upper surface.

The slope of the axis 21 imparts to the tyre the advancing movement in the furnace as a function of the advancement of the combustion phase. The combustion takes place with substantially excess air so as to avoid a pyrolytic phase and without any addition of other fuel or heat from outside other than the tyres.

The initial transient phase is evidently an exception, during which the first temporarily burning torch 11 provides for initiating the combustion reaction. The refractory bricks of type "C", especially resistant to abrasion, prevent the metal portion of the tyre from scratching the underlying layers of refractory material formed of bricks of types "A" and "B".

The ashes and the metal structure of the tyre (the latter substantially unaffected in its mechanical and chemical characteristics due to the absence of a pyrolytic phase) are removed from the combustion chamber through the duct 32 and are temporarily collected in the sealed container 33.

The smoke gases reach the after-burner 3, being subsequently oxidized by combustion achieved by mixing in turbulent manner the combustion air and the smoke gases. For this purpose, a further flow of air is provided, introduced in correspondence with the end of the combustion chamber, where the temperature is at about 1,000 to 1,200° C in such a way as to increase the air excess to 8-10%, always controlled by the computerized central control unit.

The flow of the air is supplied by means of a duct, which embraces the entire circumference of the combustion chamber 8.

The turbulence of the smoke gases is achieved by means of the special internal form of the after-burner, which furthermore detains them for at least an interval of time of two seconds, necessary for their complete oxidation, in spite of the relatively limited length of the after-burner.

For guaranteeing the correct evolution of the oxidation, there may be provided at least one second temporary burner torch 57, which ensures that the operating temperature of 950°C is reached and maintained. The smoke gases, in addition to being oxidized, are also desulphurized by the means 40, which blow the desulphurizing substance in powder form in accordance with the reactions already explained above.

The oxidized and desulphurized smoke gases, still however containing a substantial energy content in the form of heat, are fed to the means for heat recovery 5.

With the described arrangements of the turbulence and of the burning torches for temporary use at the critical moments of the operating cycle, the introduction of supplementary air for preventing inadequate oxidation of the smoke gases in the after-burner is avoided, an operation which, as is shown by experience and from the state of the art in this particular sector of the technology, leads to sure uncontrollability of the physical parameters of the combustion in the period immediately following the transient.

The stoichiometric quantity of air necessary for the combustion cycle inside the plant, which is about 9.5 m³ per kg of tyres, is introduced right at the start of combustion through two quite distinct routes, which are however jointly controlled by the computerized central control unit:
- the charging mouth 9, with associated throttling gate 15, where the entry of air is due to the sub-pressure produced by the exhaust fan 64;
- by the electrically driven blowers positioned in such a way that the flow of air generated by them directly affects the material to be thermally broken down immediately after entry into the burner.

With this technical solution, the subject of the present invention, the pyrolytic phase is completely prevented with an immediate start of the combustion, in that immediately after bringing up to operating conditions, the temperature in this zone reaches 700-800°C in the presence of an atmosphere with a very high degree of turbulence and highly oxidizing with respect to the products of combustion.

This complete oxidation action is effectively assisted by the continual turning over of the material at each revolution of the combustion chamber 8.

The air excess, to the extent of 8-10%, which is introduced at the end of the combustion chamber 8, where the temperature has reached 1,000 to 1,200°C, by means of a second motor driven fan 26, connected to a duct which hugs the entire circumference of the burner 2, in correspondence with the discharge zone for the combustion wastes, simultaneously achieves the following objectives:
a) it supplies the excess air necessary for the combustion,
b) it creates an energetic turbulence of the smoke gases before they enter the after-burner,
c) it creates a barrier, composed of a sheet of air, between the gases inside the burner and the means for removing the unburnt products 30.

As we have already seen, the aforementioned sheet of air does not constitute any obstacle to the descent under gravity of the solid residues of the unburnt materials, while it does form a barrier which prevents both possible escapes of combustion gases and possible entry of atmospheric air during the transients, which would perturb the equilibrium of the entire cycle of the plant, thus destabilizing the combustion parameters.

By the effect of the oxidation alone, due exclusively to the strong turbulence induced into the after-burner, without any addition of secondary air or supplementary heat, a raising of the temperature in the chamber of the after-burner takes place, which at entry is about 950°C, whereas at the exit it has been increased to about 1,200°C.

### LEGEND

- 1): Thermodestruction plant
- 2): Burner
- 3): After-burner
- 4): Means for charging the burner
- 5): Means for recovery of the heat energy produced by the plant
- 6): Charging head
- 7): Discharge head
- 8): Combustion chamber
- 9): Charging mouth (first opening)
- 10): Second opening
- 11): First temporary burning torch
- 12): Plug
- 13): Third opening
- 14): First motor-driven fan
- 15): Sliding door
- 16): Chute
- 17): Cylindrical liner
- 18): First outer layer of refractory material
- 19): Third inner layer of refractory material
- 20): Bricks
- 21): Axis of the combustion chamber
- 22): First support
- 23): Second support
- 24): Motor-reduction unit
- 25): Hydraulic cylinder (hydraulic means)
- 26): Second motor-driven fan
- 27): Vertical duct
- 28): Upper opening
- 29): Lower opening
- 30): Means for removal of the unburnt products
- 31): Median opening
- 32): Duct for the means for removal of unburnt products
- 33): Sealed container
- 34): First conveyor belt
- 35): Lining of the after-burner
- 36): Cross-section of gradually decreasing area
- 37): Annular portion
- 38): Section of suddenly increasing diameter
- 39): Section of gradually increasing diameter
- 40): Means for the desulphurization of the smoke gases
- 41): Silos
- 42): Metering screw
- 43): Third motor-driven fan
- 44): Discharge opening
- 46): Rod of hydraulic or pneumatic piston
- 47): Charging means
- 48): First, vertical conveyor belt
- 49): Second, horizontal conveyor belt
- 50): Weighing means
- 51): Pusher means
- 52): Pit
- 53): Tyre
- 54): Hook
- 55): Impact-absorbing plate
- 56): Interception plate
- 57): Second temporary burning torch
- 58): Steam generator
- 59): Hoppers of the steam generator
- 60): Fluidodynamic separator
- 61): Second heat exchanger
- 62): Dry or bag filters
- 63): Wet desulphurization means
- 64): Exhaust fan
- 65): Frame
- 66): Second actuator
- 67): Third actuator.

## Claims

1. Plant (1) for the thermodestruction with recovery of energy of industrial wastes, especially tyres, comprising at least one burner (2) connected to an after-burner (3) comprising a charging head (6) and a discharge head (7) situated at a lower level than the charging head (6) both fixed to the ground, and an interposed combustion chamber (8) rotating about its own axis (21), said after-burner (3) comprising means (40) for the desulphurization of the smoke gases characterized by the fact that the charging head (6) comprises a first (9), a second (10) and a third (13) mouth, said first charging mouth (9) being connected to charging means (47, 50) and regulating means (15) for the opening of said mouth (19) for the feeding of predetermined quantity of tyres to the burner (2), said second opening (10) being engaged by a plug (12) or by a temporary burning torch (11) operating through it for the starting up of the process, a third opening (13) being associated with a first motor-driven fan (14) for the introduction of a quantity of oxidizing air proportional to the quantity of wastes fed by said charging means (47, 50) and regulating means (15), by the fact that the means (40) for the desulphurization of the smoke gases are disposed at the inlet to the after-burner (3) and comprises a metering screw (42) supplying a chemical reagent to at least one third motor-driven fan (43) which blows it in a pulverized form, and by the fact that the burner (2) is connected to the after-burner (3) by a vertical duct (27) comprising an upper opening (28) leading into the after-burner (3), a lower opening (29) situated above discharge means (30) for the unburnt products and a middle opening (31) leading into the burner (2), that the plant is also provided with means (5) for the recovery of the heat, connected to the after burner (3).

2. Plant according to claim 1 characterized by the fact that the charging means (47) comprise a first vertical conveyor belt (48) provided with hooks (54) of length such as to engage one tyre at a time, a second horizontal conveyor belt (49), weighing means (50) provided on said second horizontal conveyor belt (49), and pusher means (51) for introducing one tyre at a time into said burner (2) through the charging head (6)

3. Plant according to claim 1 characterized by the fact that the pusher means (51) comprise a rod (46) which slides substantially parallel to the axis of the charging mouth or opening (9).

4. Plant according to claim 1 characterized by the fact that said charging opening (9) is provided internally with an anti-rolling chute (16) inclined towards the lower part of the combustion chamber (8) at an angle of 8°.

5. Plant according to claim 1, characterized by the fact that the combustion chamber (8) has an inclination, relative to the ground, which can be regulated between 2° and 6°.

6. Plant according to claim 1 characterized by the fact that the peripheral velocity of the combustion chamber (8) is chosen between values of 0.5 and 2 m per minute.

7. Plant according to claim 1 characterized by the fact that the combustion chamber (8) comprises a first (22) and a second (23) support, said first support (22) being positioned in correspondence with the charging head (6) and comprising a motor-reduction unit (24), said second support (23) being positioned in correspondence with the discharge head (7) and comprising hydraulic lifting means (25).

8. Plant according to claim 1 characterized by the fact that said combustion chamber (8) comprises a cylindrical containing liner (17) of metallic material, internally faced with two layers of refractory material, respectively a first, outer layer (18) of bricks (20) having insulating-refractory characteristics and a second, inner layer (19) of bricks (20) of a material resistant to abrasion.

9. Plant according to claim 8 characterized by the fact that the first, outer layer (18) is composed, for a third of the length of the combustion chamber (8) in proximity to the charging head (6), of bricks (20) of refractory insulating material of type "A", and for the remaining two-thirds of type "B", said bricks of type "A" having the following chemical composition:
| | |
|---|---|
| Al₂O₃ + TiO₂ | 62-64% |
| Fe₂O₃ | 1.5% |
with sufficient binder to make up 100%,
said bricks of type "B" having the following chemical composition:
| | |
|---|---|
| Al₂O₃ + TiO₂ | 38-40% |
| Fe₂O₃ | 2% |
with sufficient binder to make up 100%

10. Plant according to claim 8 characterized by the fact that the bricks (20) of the second inner layer (19) of type "C" have the following chemical composition:
| | |
|---|---|
| Al₂O₃ + TiO₂ | 87% |
| Fe₂O₃ | 1.25% |
| Cr₂O₃ | 4% |
with sufficient binder to make up 100%.
have variable insulating-refractory characteristics, chosen according to the intermediate position adopted between the charging head (6) and discharge head (7).

11. Plant according to claim 1 characterized by the fact that the after burner (3) comprises a jacket (35) of metallic material, internally lined with refractory material, in such a way as to form at least one cross-section of gradually decreasing area (36) in the direction of motion of the smoke gases down to a minimum value of the section which continues through an annular portion (37) of smaller extent that the former and followed, in the direction of motion of fluid, by sections of immediately increasing diameter (38) or gradually increasing diameter (39)

12. Plant according to claim 1 characterized by the fact that in correspondence with said median opening (31) of the vertical duct an oxidizing air flow is blown in axially and along the entire perimeter of said opening (31).

13. Plant according to claim 1 characterized by the fact that said chemical reagent is an alkaline substance blown in is a powder having the following chemical composition: NaHCO₃.

14. Plant according to claim 1 characterized by the fact that the means (30) for removing the unburnt products comprise a first conveyor belt (34) and a container (33), both operating in a sealed condition with respect to the surrounding environment.

15. Plant according to claim 1 characterized by the fact that said means (5) for the recovery of the heat generated comprises a steam generator (58), a fluidodynamic separator (60) and a second heat exchanger (61).

16. Plant according to claim 15 characterized by the fact that said means (5) comprise, in addition, dry filters (62) and wet desulphurization means (63).

## Patentansprüche

1. Anlage (1) zur Energierückgewinnung für die thermische Entsorgung von Industrieabfall, insbesondere Reifen, mit mindestens einem Brenner (2), welcher mit einem ein Ladeende (6) und ein niedriger als das Ladeende (6) angebrachtes Entladeende (7) aufweisenden, mit beiden Enden mit dem Boden befestigten Nachbrenner (3) verbunden ist, und einer dazwischenliegenden, um ihre eigene Achse (21) drehenden Verbrennungskammer (8), wobei besagter Nachbrenner (3) Mittel (40) zur Entschwefelung der Rauchgase enthält, **dadurch gekennzeichnet**, daß das Ladeende (6) eine erste (9), eine zweite (10) und eine dritte (13) Öffnung aufweist, wobei die besagte erste Öffnung (9) mit Lademitteln (47, 50) und mit Regulierungsmitteln (15) zum Öffnen der besagten Öffnung (9) zur Ladung einer vorgegebenen Menge von Reifen in den Brenner (2) versehen ist, wobei besagte zweite Öffnung (10) mit einem Verschluß (12) oder mit einer zeitweiligen Brennvorrichtung (11) versehen ist, welcher durch diese zum Anlassen des Vorgangs wirkt, wobei die dritte Öffnung (13) mit einem ersten motorgetriebenen Gebläse (14) zur Einführung einer Menge von oxidierender Luft entsprechend der Abfallmenge, die durch die Lademittel (47, 50) eingebracht worden ist, und mit Regulierungsmitteln (15) versehen ist, daß die Mittel (40) zur Entschwefelung der Rauchgase am Eingang zum Nachbrenner (3) angeordnet sind und eine Zumeßschraube (42) zur Versorgung mindestens eines dritten motorgetriebenen Gebläses (43) mit einem Reagenzmittel aufweisen, welches dieses in einer pulverisierten Form einbläst, und daß der Brenner (2) über eine senkrechte Rohrleitung (27) mit dem Nachbrenner (3) verbunden ist, welche eine obere, in den Nachbrenner (3) führende Öffnung (28), eine untere, oberhalb von Entlademitteln (30) für unverbrannte Produkte vorhandene Öffnung (29), und eine mittlere, in den Brenner (2) führende Öffnung (31) aufweist, daß die Anlage auch mit mit dem Nachbrenner (3) verbundenen Mitteln (5) zur Rückgewinnung der Wärme versehen ist.

2. Anlage nach Anspruch 1, **dadurch gekennzeichnet**, daß die Lademittel (47) ein erstes senkrechtes, mit Haken (54) mit einer Länge zur Aufnahme jeweils eines Reifens versehenes Förderband (48), ein zweites, mit Wiegemitteln (50) versehenes waagerechtes Förderband (49) und Schiebemittel (51) zur Einführung jeweils eines Reifens in den besagten Brenner (2) durch das Ladeende (6) aufweisen.

3. Anlage nach Anspruch 1, **dadurch gekennzeichnet**, daß die Schiebemittel (51) eine Stange (46) aufweisen, welche sich im wesentlichen parallel zur Achse des Lademundes oder -öffnung (9) bewegt.

4. Anlage nach Anspruch 1, **dadurch gekennzeichnet**, daß besagte Ladeöffnung (9) im Innern mit einer Anti-Roll-Rutsche (16) versehen ist, welche gegen den unteren Teil der Verbrennungskammer (8) in einem Winkel von 8 Grad geneigt ist.

5. Anlage nach Anspruch 1, **dadurch gekennzeichnet**, daß die Verbrennungskammer (8) eine Neigung relativ zum Boden aufweist, welche in einem Winkel zwischen 2 und 6 Grad einstellbar ist.

6. Anlage nach Anspruch 1, **dadurch gekennzeichnet**, daß die Umfangsgeschwindigkeit der Verbrennungskammer (8) zwischen Werten von 0,5 und 2 m pro Minute gewählt ist.

7. Anlage nach Anspruch 1, **dadurch gekennzeichnet**, daß die Verbrennungskammer (8) eine erste (22) und eine zweite (23) Lagerung aufweist, wobei besagte erste Lagerung (22) sich in Übereinstimmung mit dem Ladeende (6) befindet und eine Motor-Untersetzungs-Einheit (24) aufweist, wobei besagte zweite Lagerung (23) sich in Übereinstimmung mit dem Entladeende (7) befindet und hydraulische Hebemittel (25) aufweist.

8. Anlage nach Anspruch 1, **dadurch gekennzeichnet**, daß besagte Verbrennungskammer (8) eine zylindrische Behälter-Ausfütterung (17) aus metallischem Material aufweist, welcher intern zwei Schichten aus hitzebeständigem Material, bzw. einer ersten, äußeren Schicht (18) aus Ziegeln (20) mit isolierenden hitzebeständigen Eigenschaften und einer zweiten, inneren Schicht (19), aus Ziegeln (20) bestehend, aus einem abriebfesten Material gegenüberstehen.

9. Anlage nach Anspruch 8, **dadurch gekennzeichnet**, daß die erste, äußere Schicht (18) auf einem Drittel der Länge der Verbrennungskammer (8) im Bereich des Ladeendes (6) aus Ziegeln (20) aus hitzebeständigem isolierendem Material des Typs "A" und auf den verbleibenden zwei Dritteln aus dem Typ "B" gebildet wird, wobei besagte Ziegel des Typs "A" aus der folgenden chemischen Zusammensetzung bestehen:
| | |
|---|---|
| Al₂O₃ + TiO₂ | 62-64 % |
| Fe₂O₃ | 1,5 % |
mit entsprechenden Bindemitteln, um auf 100 % zu kommen,
wobei besagte Ziegel des Typs "B" aus der folgenden Zusammensetzung bestehen:
| | |
|---|---|
| Al₂O₃ + TiO₂ | 38-40 % |
| Fe₂O₃ | 2 % |
mit entsprechenden Bindemitteln, um auf 100 % zu kommen.

10. Anlage nach Anspruch 8, **dadurch gekennzeichnet**, daß die Ziegel der zweiten inneren Schicht (19) des Typs "C" die folgende chemische Zusammensetzung aufweisen:
| | |
|---|---|
| Al₂O₃ + TiO₂ | 87 % |
| Fe₂O₃ | 1,25 % |
| Cr₂O₃ | 4 % |
mit entsprechenden Bindemitteln, um auf 100 % zu kommen,
daß sie variable isolierende hitzebeständige Eigenschaften aufweisen und entsprechend der angenommenen Position zwischen dem Ladeende (6) und dem Entladeende (7) verwendet werden.

11. Anlage nach Anspruch 1, **dadurch gekennzeichnet**, daß der Nachbrenner (3) ein Gehäuse (35) aus metallischem Material aufweist, welches im Innern mit hitzebeständigem Material derart ausgekleidet ist, daß zumindest ein Querschnitt eines gleichmäßig in Richtung der Bewegung der Rauchgase sich auf einen Minimalwert des Querschnitts verjüngenden Bereichs (36) sich auf denjenigen Querschnitt verringert, welcher in dem ringförmigen Abschnitt von geringerem Ausmaß in der Richtung der Bewegung der Flüssigkeit in Abschnitten von sofort größer werdendem Durchmesser (38) oder gleichmäßig größer werdendem Durchmesser (39) sich fortsetzt und folgt.

12. Anlage nach Anspruch 1, **dadurch gekennzeichnet**, daß in Übereinstimmung mit besagter mittlerer Öffnung (31) der senkrechten Führung ein oxidierender Luftstrom axial und über den gesamten Bereich der besagten Öffnung (31) geblasen wird.

13. Anlage nach Anspruch 1, **dadurch gekennzeichnet**, daß das chemische Reagenz eine alkalische Substanz ist, welche in Pulverform eingeblasen wird und folgende chemische Zusammensetzung aufweist: NaHCO₃.

14. Anlage nach Anspruch 1, **dadurch gekennzeichnet**, daß die Mittel (30) für die Entfernung unverbrannter Anteile aus einem ersten Förderband (34) und einem Behälter (33) gebildet werden, welche beide in einem gegenüber der Umwelt verschlossenen Zustand betrieben werden.

15. Anlage nach Anspruch 1, **dadurch gekennzeichnet**, daß besagte Mittel (5) für die Rückgewinnung der erzeugten Wärme einen Dampferzeuger (58), einen Strömungs-Abscheider (60) und einen zweiten Wärmeaustauscher (61) aufweisen.

16. Anlage nach Anspruch 15, **dadurch gekennzeichnet**, daß besagte Mittel (5) zusätzlich Trockenfilter (62) und nasse Entschwefelungsmittel (63) aufweisen.

## Revendications

1. Installation (1) pour la thermo-destruction avec récupération d'énergie de déchets industriels, plus spécialement de pneumatiques, comprenant au moins un brûleur (2) raccordé à un post-brûleur (3) et qui comprend un tête de chargement (6) et une tête de déchargement (7) située à un niveau inférieur à celui de la tête de déchargement (6), toutes deux fixées au sol, et une chambre de combustion (8) interposée, qui tourne autour de son propre axe (21), ledit post-brûleur (3) comprenant des moyens (40) pour la désulfuration des gaz de fumée, caractérisée par le fait que la tête de chargement (6) comprend une première bouche (9), une deuxième bouche (10) et une troisième bouche (13), ladite première bouche de chargement (9) étant reliée à des moyens de chargement (47, 50), et à des moyens de régulation (15) agissant sur l'ouverture de ladite bouche (19) pour l'introduction d'une quantité prédéterminée de pneumatiques dans le brûleur (2), ladite deuxième ouverture (10) étant équipée d'un bouchon (12) ou d'une torche de combustion temporaire (11) qui opère à travers cette bouche pour le démarrage du processus, une troisième ouverture (13) étant associée à un premier ventilateur (14) entraîné par moteur pour l'introduction d'une quantité d'air oxydant proportionnelle à la quantité de déchets introduite par lesdits moyens de chargement (47, 50) et par les moyens de régulation (15), par le fait que les moyens (40) prévus pour la désulfuration des gaz de fumée sont disposés à l'entrée donnant sur le post-brûleur (3) et comprennent une vis doseuse (42) qui achemine un réactif chimique à au moins un troisième ventilateur (43) entraîné par moteur, qui l'insuffle sous une forme pulvérisée, et par le fait que le brûleur (2) est raccordé au post-brûleur (3) par un conduit vertical (27) comprenant une ouverture supérieure (28) qui conduit au post-brûleur (3), une ouverture inférieure (29) située au-dessus des moyens de déchargement (30) qui évacuent les produits imbrûlés, et une ouverture centrale (31) qui débouche dans le brûleur (2) et par le fait que l'installation est également équipée de moyens (5) pour la récupération de la chaleur, qui sont raccordés au post-brûleur (3).

2. Installation selon la revendication 1, caractérisé par le fait que les moyens de chargement (47) comprennent une première courroie transporteuse verticale (48) munie de crochets (54) d'une longueur propre à saisir un pneumatique à la fois, une deuxième courroie transporteuse horizontale (49), des moyens de pesée (50) prévus sur ladite deuxième courroie transporteuse horizontale (49) et des moyens poussoirs (51) servant à introduire un pneumatique à la fois dans ledit brûleur (2), à travers la tête de chargement (6).

3. Installation selon la revendication 1, caractérisée par le fait que les moyens poussoirs (51) comprennent une tige (46) qui coulisse sensiblement parallèlement à l'axe de la bouche ou ouverture de chargement (9).

4. Installation selon la revendication 1, caractérisée par le fait que ladite ouverture de chargement (9) est munie intérieurement d'une goulotte anti-roulement (16) inclinée vers la partie inférieure de la chambre de combustion (8) selon un angle de 8°.

5. Installation selon la revendication 1, caractérisée par le fait que la chambre de combustion (8) a une inclinaison par rapport au sol, qui peut être réglée entre 2° et 6°.

6. Installation selon la revendication 1, caractérisée par le fait que la vitesse périphérique de la chambre de combustion (8) est choisie entre des valeurs de 0,5 et 2 m par minute.

7. Installation selon la revendication 1, caractérisée par le fait que la chambre de combustion (8) comprend un premier support (22) et un deuxième support (23), ledit premier support (22) étant positionné au droit de la tête de chargement (6) et comprenant une unité moteur-réducteur (24), ledit deuxième support (23) étant positionné au droit de la tête de déchargement (7) et comprenant des moyens élévateurs hydrauliques (25).

8. Installation selon la revendication 1, caractérisée par le fait que ladite chambre de combustion (8) comprend une coque cylindrique (17) en matière métallique, revêtue intérieurement de deux couches de matière réfractaire, qui sont respectivement une première couche ou couche extérieure (18) de briques (20) ayant des caractéristiques isolantes et réfractaires, et une deuxième couche ou couche intérieure (19) de briques (20) faites d'une matière résistant à l'abrasion.

9. Installation selon la revendication 8, caractérisée par le fait que la première couche ou couche extérieure (18) est composée de briques (20) de matière réfractaire isolante du type "A" sur un tiers de la longueur de la chambre de combustion (8) à proximité de la tête de chargement (6), et du type "B" pour les deux tiers restants, lesdites briques du type "A" ayant la composition chimique suivante :
| | |
|---|---|
| Al₂O₃ + TiO₂ | 62 à 64 % |
| Fe₂O₃ | 1,5 % |
avec du liant en quantité suffisante pour compléter à 100 %,
lesdites briques du type "B" ayant la composition chimique suivante :
| | |
|---|---|
| Al₂O₃ + TiO₂ | 38 à 40 % |
| Fe₂O₃ | 2 % |
avec du liant en quantité suffisante pour compléter à 100 %.

10. Installation selon la revendication 8, caractérisée par le fait que les briques (20) de la deuxième couche ou couche intérieure (19) du type "C" ont la composition chimique suivante :
| | |
|---|---|
| Al₂O₃ + TiO₂ | 87 % |
| Fe2O₃ | 1,25 % |
| Cr₂O₃ | 4 % |
avec du liant en quantité suffisante pour compléter à 100 %,
et possèdent des caractéristiques isolantes et réfractaires variables, choisies en fonction de la position intermédiaire adoptée entre la tête de chargement (6) et la tête de déchargement (7).

11. Installation selon la revendication 1, caractérisée par le fait que le post-brûleur (3) comprend une double paroi (35) en matière métallique doublée intérieurement de matière réfractaire, de manière à former au moins une section transversale dont la surface (36) décroît progressivement dans le sens du mouvement des gaz de fumée, jusqu'à une valeur minimale de la section qui se prolonge par une partie annulaire (37) de plus petite dimension que la première, et suivie, dans le sens du mouvement du fluide, par des sections de diamètre (38), immédiatement croissant ou de diamètre (39) progressivement croissant.

12. Installation selon la revendication 1, caractérisée par le fait qu'au niveau de ladite ouverture centrale (31) du conduit vertical, un courant d'air oxydant est insufflé axialement et le long de tout le périmètre de ladite ouverture (31).

13. Installation selon la revendication 1, caractérisée par le fait que ledit réactif chimique est une substance alcaline insufflée sous la forme d'une poudre ayant la composition chimique suivante : NaHCO₃.

14. Installation selon la revendication 1, caractérisée par le fait que les moyens (30) servant à évacuer les produits non-brûlés comprennent une première courroie transporteuse (34) et un conteneur (33), qui fonctionnent tous deux dans des conditions hermétiquement isolées de l'environnement extérieur.

15. Installation selon la revendication 1, caractérisée par le fait que lesdits moyens (5) destinés à récupérer la chaleur dégagée comprennent un générateur de vapeur (58), un séparateur dynamique à fluide (60) et un deuxième échangeur de chaleur (61).

16. Installation selon la revendication 15, caractérisée par le fait que lesdits moyens (5) comprennent en supplément des filtres secs (62) et des moyens de désulfuration humide (63).
